# EUROPEAN PATENT SPECIFICATION

(11) **EP 0 583 615 B1**
(45) Date of publication and mention of the grant of the patent: **10.09.1997**
(21) Application number: 93111228.8
(22) Date of filing: 13.07.1993
(51) Int. Cl.: B29D 30/34, B60C 9/11

(54) **Method of producing a toroidal road vehicle tire carcass**
Verfahren zum Herstellen einer torusförmigen Reifenkarkasse
Procédé de fabrication d'une carcasse toroidale de pneu

(30) Priority: 21.07.1992 IT TO920621
(43) Date of publication of application: 23.02.1994
(73) Proprietor: BRIDGESTONE CORPORATION, Tokyo 104 (JP)
(72) Inventor: Siegenthaler, Karl J., I-00100 Roma, Ostia (IT)
(74) Representative: Jorio, Paolo, Dr. Ing.

(56) References cited:
- EP-A- 0 009 018
- EP-A- 0 549 869
- FR-A- 410 370
- FR-A- 1 513 157
- FR-A- 2 132 509

## Description

The present invention relates to a method of producing a toroidal road vehicle tire carcass.

More specifically, the present invention relates to a straightforward, low-cost method of producing a toroidal radial tire carcass comprising two annular beads connected by a toroidal reticulated structure in turn comprising a number of elongated reinforcing elements connecting and extending substantially radially in relation to the beads.

According to EP-A-0 549 869, which is considered herein under the terms of Article 54(3) EPC, a road vehicle tire carcass, comprising two annular beads connected by a toroidal reticulated structure defined by a number of elongated reinforcing elements extending between and substantially radially in relation to the beads, is produced by using at least one continuous cord for forming a continuous series of oppositely orientated U-shaped loops, the loops in both series being so connected as to weave a substantially tubular structure enclosing the two beads.

According to the present invention, there is provided a method of producing a toroidal road vehicle tire carcass comprising two parallel annular beads, and a toroidal reticulated structure connecting the two beads and comprising a number of elongated reinforcing elements located between and extending substantially radially in relation to the beads; said elongated reinforcing elements being formed from a single continuous cord wound in such a manner as to form a succession of U-shaped loops, each of which is wound about the two beads so as to form a tubular reticulated structure, and presents an open end and a closed end connected along an annular interconnection line extending in an intermediate position in relation to the beads.

The present invention will now be described by way of example with reference to the accompanying drawings, in which:
Fig.1 shows a schematic view in perspective of a portion of a carcass formed using the method according to the present invention;
Fig.2 shows a spreadout view of the Fig.1 carcass portion.

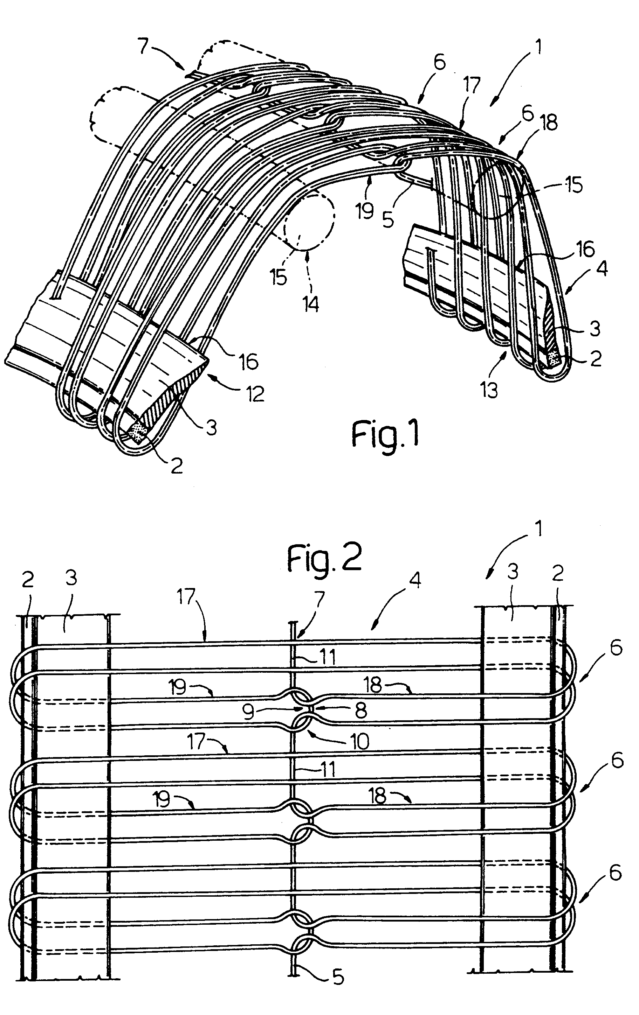

Number 1 in Fig.1 indicates a toroidal road vehicle tire carcass.

Carcass 1 comprises two annular beads 2 with respective fillers 3; and a toroidal reticulated structure 4 connecting beads 2 and in turn comprising a number of reinforcing elements extending between and substantially radially in relation to beads 2.

In the example shown, said reinforcing elements are formed from a single continuous cord 5 wound in such a manner as to form a succession of U-shaped loops 6 extending from an annular interconnection line 7. Line 7 lies substantially in a plane between the planes of beads 2, and, as in the example shown, is preferably located substantially centrally in relation to the planes of beads 2.

Each loop 6 presents an open end 8 and a closed end 9, and is wound about both beads 2 and fillers 3 so as to form, together with the other loops 6, a substantially tubular structure 4. More specifically, each loop 6 is arranged with both ends 8 and 9 along line 7, and with open end 8 engaging closed end 9, so as to connect ends 8 and 9 by means of a succession of interconnections 10 along line 7. Moreover, along line 7, there extends a succession of cord portions 11, each connecting the open end 8 of one loop 6 to the open end 8 of the next loop 6.

Carcass 1 as described above is preferably formed on a supporting frame 12 comprising an inner portion 13 defined by beads 2 and forming the skeleton of carcass 1; and a removable auxiliary outer portion 14 defined by two rings 15, each consisting, in known manner not shown, of a number of releasably-connected curved segments. Portion 14 is located between and radially outwards in relation to beads 2, so as to define, with beads 2, two annular openings 16.

When forming structure 4, frame 12 is preferably rotated about its axis, and structure 4 is woven about beads 2 and outwards of portion 14. More specifically, each loop 6 presents an intermediate portion 17 extending between the two beads outwards of portion 14 and through one of openings 16; and two end portions 18 and 19, the first of which, adjacent to open end 8, extends outwards of openings 16, and the second of which, adjacent to closed end 9, extends through the other opening 16.

## Claims

1. A method of producing a toroidal road vehicle tire carcass (1) comprising two parallel annular beads (2), and a toroidal reticulated structure (4) connecting the two beads (2) and comprising a number of elongated reinforcing elements located between and extending substantially radially in relation to the beads (2); said elongated reinforcing elements being formed from a single continuous cord (5) wound in such a manner as to form a succession of U-shaped loops (6), each of which is wound about the two beads (2) so as to form a tubular reticulated structure (4), and presents an open end (8) and a closed end (9) connected along an annular interconnection line (7) extending in an intermediate position in relation to the beads (2).

2. A method as claimed in Claim 1, characterized by the fact that said continuous cord (5) is so wound that said interconnection line (7) is located substantially centrally in relation to the bead planes.

3. A method as claimed in Claim 1 or 2, characterized by the fact that it comprises an initial stage consisting in forming a supporting frame (12) for the carcass (1); said frame (12) comprising an inner portion (13) defined by the two beads (2) and forming the skeleton of said carcass (1), and a removable auxiliary outer portion (14) located between and radially outwards in relation to the beads (2); said reticulated structure (4) being woven about the beads (2) and outwards of the auxiliary outer portion (14).

4. A method as claimed in Claim 3, characterized by the fact that said inner and outer portions (13, 14) define two annular openings (16); each said loop (6) comprising an intermediate portion (17) extending between said two beads (2) and through one of said openings (16), and two end portions (18, 19), one of which extends through the other of said openings (16).

## Patentansprüche

1. Verfahren zur Herstellung einer torusförmigen Reifenkarkasse (1) für ein Straßenfahrzeug, die zwei parallele, ringförmige Wülste (2) aufweist, sowie eine torusförmige, netzartige Struktur (4), die die beiden Wülste (2) verbindet und eine Anzahl länglicher Verstärkungselemente aufweist, die zwischen den beiden Wülsten (2) angeordnet sind und sich im wesentlichen radial in Zuordnung zu diesen erstrecken; wobei die genannten länglichen Verstärkungselemente aus einem einzigen, durchgehenden Cordstrang (5) gebildet sind, der auf eine solche Weise gewickelt ist, daß er eine Folge U-förmiger Schlaufen (6) bildet, von denen jeder um die beiden Wülste (2) herumgewickelt ist, um eine schlauchförmige, netzartige Struktur (4) zu bilden, und ein offenes Ende (8) sowie ein geschlossenes Ende (9) aufweist, die längs einer ringförmigen Verbindungslinie (7) verbunden sind, die sich in Zuordnung zu den beiden Wülsten (2) in einer Zwischenlage erstreckt.

2. Verfahren wie beansprucht in Anspruch 1, dadurch **gekennzeichnet,** daß der genannte durchgehende Cordstrang (5) so gewickelt ist, daß die Verbindungslinie (7) im wesentlichen in Zuordnung zu den beiden Wulstebenen mittig angeordnet ist.

3. Verfahren wie beansprucht in Anspruch 1 oder 2, dadurch **gekennzeichnet,** daß es einen Anfangsschritt aufweist, der darin besteht, einen Tragerahmen (12) für die Karkasse (1) zu bilden; wobei der genannte Rahmen (12) einen inneren Abschnitt (13) aufweist, der von den beiden Wülsten (2) gebildet ist und das Skelett der genannten Karkasse (1) bildet, sowie einen abnehmbaren, axial äußeren Hilfsabschnitt (14), der in Zuordnung zu den Wülsten (2) zwischen diesen und radial außerhalb angeordnet ist; und wobei die genannte netzartige Struktur (4) rund uni die Wülste (2) und außerhalb des genannten äußeren Hilfsabschnitts (14) gewebt wird.

4. Verfahren wie beansprucht in Anspruch 3, dadurch **gekennzeichnet,** daß der genannte innere und äußere Abschnitt (13, 14) zwei ringförmige Öffnungen (16) festlegen; wobei jede genannte Schlaufe (6) einen Zwischenabschnitt (17) aufweist, der sich zwischen den genannten beiden Wülsten (2) und durch eine der genannten Öffnungen (16) hindurch erstreckt, sowie zwei Endabschnitte (18, 19), von denen sich einer durch die andere der genannten Öffnungen (16) erstreckt.

## Revendications

1. Procédé de production d'une carcasse de pneu torique pour véhicule automobile routier (1) comprenant deux talons annulaires parallèles (2) et une structure torique réticulée (4) raccordant les deux talons (2) et comprenant un certain nombre d'éléments de renfort allongés situés entre les talons (2) et s'étendant sensiblement dans le sens radial par rapport à ceux-ci ; lesdits éléments de renfort allongés étant constitués d'un seul câble continu (5) enroulé de manière à former une succession de boucles en forme de U (6), dont chacune est enroulée autour dès deux talons (2) de manière à former une structure réticulée tubulaire (4) et présente une extrémité ouverte (8) et une extrémité fermée (9) reliées suivant une ligne d'interconnexion annulaire (7) s'étendant en position intermédiaire aux talons (2).

2. Procédé selon la revendication 1, caractérisé par le fait que ledit câble continu (5) est enroulé de manière telle que ladite ligne d'interconnexion (7) est située de manière sensiblement centrale par rapport aux plans des talons.

3. Procédé selon la revendication 1 ou 2, caractérisé par le fait qu'il comprend une étape initiale consistant à former un cadre de support (12) destiné à la carcasse (1) ; ledit cadre (12) comprenant une partie interne (13) définie par les deux talons (2) et constituant le squelette de ladite carcasse (1) et une partie externe auxiliaire amovible (14) située entre les talons (2) et s'étendant dans le sens radial vers l'extérieur par rapport à ceux-ci ; ladite structure réticulée (4) étant tissée autour des talons (2) et vers l'extérieur de la partie externe auxiliaire (14).

4. Procédé selon la revendication 3, caractérisé par le fait que lesdites parties interne et externe (13, 14) définissent deux ouvertures annulaires (16) ; chacune desdites boucles (6) comprenant une partie intermédiaire (17) s'étendant entre lesdits deux talons (2) et à travers l'une desdites ouvertures (16) et deux parties d'extrémité (18, 19) dont l'une s'étend à travers l'autre desdites ouvertures (16).
